# EUROPEAN PATENT APPLICATION

(11) **EP 4 787 205 A1**
(43) Date of publication of application: **05.08.2026**
(21) Application number: 26154614.7
(22) Date of filing: 28.01.2026
(51) Int. Cl.: G06F 21/55, H04L 9/40, G06F 21/57

(54) **LLM-BASED METHOD FOR ADVANCED PERSISTENT THREAT (APT) DETECTION WITH NATURAL LANGUAGE INTERPRETABILITY**

(30) Priority: 29.01.2025 IL 31870525
(71) Applicant: Deutsche Telekom AG, 53113 Bonn (DE)
(72) Inventor: AMARU, Yhonatan Zvi, 9350349 Jerusalem (IL); MIMRAN, David, 6215505 Tel Aviv (IL); SHABTAI, Asaf, 7684200 Hulda (IL); ELOVICI, Yuval, 7986400 Arugot (IL); GANDHI, Parth Atulbhai, 360001 Rajkot (IN); WUDALI, Prasanna Narasi, 500058 Hyderabad (IN); LEHMAN, Heiko, 12587 Berlin (DE); STRASSMANN, Martin, 53123 Bonn (DE); SCHMIDT, Jan-Holger, 45770 Marl (DE)
(74) Representative: Schmidt, Christian

(57) **Abstract**

An LLM-based method for detecting Advanced Persistent Threat (APT) and providing natural language interpretability of the detection findings, according to which unsupervised learning is performed, for statistical anomaly detection in provenance data of provenance-based systems. Large Language Models (LLMs) with implicit knowledge are used to detect unknown attack patterns by performing context-aware graph-based analysis of detected anomalies in the provenance data, for accurate interpretation of the detected anomalies and underlying context of potential attacks; natural language explanations, drawing connections between events, and outputting insights, based on the interpretation are provided.

## Description

### Field of the Invention

The present invention relates to the field of cyber security systems. More particularly, the present invention relates to an LLM-based method for Advanced Persistent Threat (APT) detection and for providing natural language interpretability of the detection findings.

### Background for the Invention

Advanced Persistent Threats (APTs) are sophisticated cyber-attacks that can remain undetected for extended periods, making them particularly challenging to mitigate and therefore, a significant effort is required to detect them and respond effectively. Existing provenance-based intrusion detection methods (that utilize data provenance to enhance the detection performance of intrusions and reduce false-alarm rates) often lack interpretability (the ability of humans to readily understand the reasoning behind predictions and decisions made by a method or an Al model) and suffer from high false positive rates, while investigation approaches are either supervised, or limited only to known attacks. Advanced persistent threats (APTs) pose significant risks to organizations, including the risks of data breaches, intellectual property theft, financial loss, and reputational damage. The importance of developing robust APT detection and investigation capabilities was shown by recent high-profile incidents, such as the SolarWinds supply chain attack [20] and the exploitation of vulnerabilities in Microsoft Exchange Server [28]. These incidents demonstrate the evolving nature of APTs and the need for adaptive detection mechanisms.

Provenance data analysis has emerged as an efficient approach for APT detection and investigation (data provenance refers to the detailed record of the origin, lifecycle, and changes made to a file or set of data. It includes tracking who created or modified the data, when and where these changes occurred, and the context behind these modifications, to provide a comprehensive history of data, ensuring its integrity and reliability).

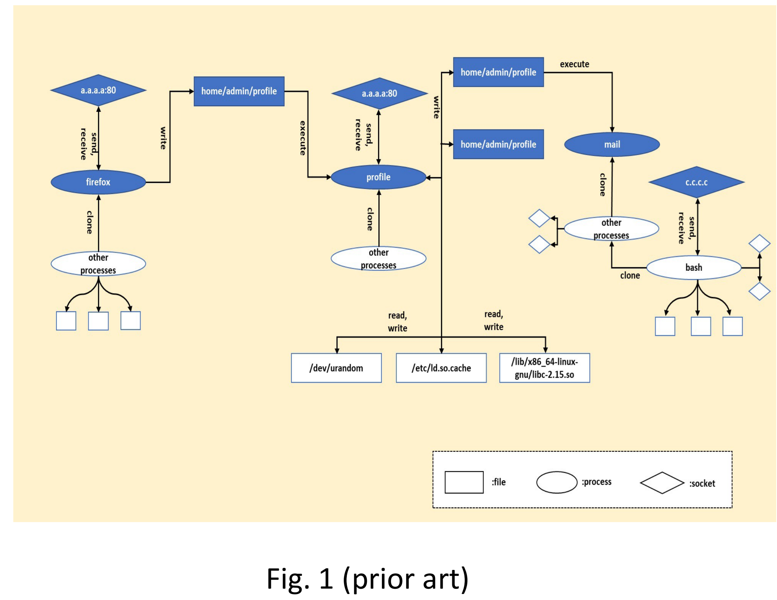

Fig. 1 (prior art) illustrates an example of a provenance graph (a directed, heterogeneous data structure that records the causal history and relationships between system entities and activities) that is generated from the data and depicts the relationships between processes, files and sockets (endpoints of a two way communication link between two programs running on the network), while illustrating their interactions and data flows.

Provenance-based detection and investigation of cyber threats are implemented in real-world security operations. Traditional rule-based methods for analyzing provenance data [12, 14, 18, 26] have proven effective in identifying only known attack patterns. However they are limited due to the need for expert labeling and their inability to detect zero-day attacks (a zero-day exploit is a cyberattack vector that takes advantage of an unknown or unaddressed security flaw in computer software, hardware or firmware. "Zero day" refers to the fact that the software or device vendor has zero days to fix the flaw because malicious actors can already use it to access vulnerable systems). Deep learning-based anomaly detection methods [1, 4, 7, 10, 13, 15, 17, 23, 34, 35, 37, 38, 40, 41], which aim to model normal system behavior and detect deviations indicative of novel attack vectors, has been used. These methods allow identifying previously unknown threats without relying on prior attack data which is often unavailable.

Despite the potential of anomaly detection methods, their practical application is limited due to their sensitivity to normal system variability (natural noise), which makes it difficult to optimally balance high recall (a metric that measures how often a machine learning model correctly identifies true positives from all the actual positive samples in the dataset) and a low false positive rate.

Existing detection methods are constrained by four significant limitations: (1) they rely on large training datasets and disproportionately small testing windows, which do not correspond to the dynamic and continuously evolving nature of real-world data environments; (2) they face the problem of data leakage [17, 35], in which models are inadvertently trained on future data, leading to inflated detection performance metrics; (3) they require offline analysis on vast amount of provenance data, thereby creating delays between provenance capture and threat investigation [25]; and (4) they lack interpretability.

Existing attack investigation methods are either supervised machine learning approaches [1] or they are only capable of detecting and providing analysis for known attacks [12, 14, 26].

System-level data provenance captures the flow of data between kernel-level objects such as processes, files, and sockets [29]. This provenance can be modeled as a directed graph, referred to as a provenance graph, where the nodes represent kernel-level objects (essential, reference-counted data structures created by the operating system kernel to maintain state information, manage system resources, and provide security in kernel mode) and the edges denote different types of interactions or dependency relationships between these objects. These interactions are generally the outcomes of system calls.

The Local Outlier Factor (LOF) [27] is an unsupervised anomaly detection method used to identify outliers in a dataset (data points that deviate significantly from the rest of the dataset) by comparing the local density of each data point to the densities of its neighbors by assigning an outlier score to each data point, based on how its local density deviates from that of surrounding points. A point is considered an outlier if its density is significantly lower than that of its neighbors. Unlike global outlier detection methods, LOF is particularly effective in detecting local outliers in datasets where the density of points varies across the feature space. This makes LOF well-suited for datasets with complex, multi-modal distributions.

Chain prompting, [36] is a prompting technique that is employed for complex tasks that require step-by-step reasoning by language models. Chain prompting allows the model to break down a large complex task into a sequence of simple manageable tasks.

Provenance-based approaches for APT detection have been developed to address increasingly sophisticated cybersecurity challenges. Rule-based techniques [26, 38] utilize predefined security policies and heuristic rules to identify attack patterns. However, these methods require extensive manual effort and are less effective in detecting zero-day exploits [15].

Anomaly-based detection methods, including statistical techniques [6, 13, 14, 18, 22, 34], path-based approaches [1, 7, 8, 41], and graph-based methods [10, 17, 35, 37, 40], have been used for detecting APTs. However, these methods often hardly adapt to changes in system behavior over time, which can lead to high false positive rates. Furthermore, the alerts generated by these methods often lack interpretability, making it challenging for security analysts to understand and investigate the detected anomalies.

Other solutions focus on using transformers (a transformer architecture is a type of neural network that uses self-attention mechanisms to process input sequences) and LLMs for anomaly detection in logs. For example, LAnoBERT [21], which was proposed by Lee et al., employs regular expressions for minimal log preprocessing, thereby enhancing flexibility across different formats. LogGPT [11], proposed by Han et al., uses a GPT-2 model with sequential prediction and a top-K reward mechanism to improve detection capabilities. LogPrompt [24], proposed by Liu et al., leverages advanced prompt strategies to boost LLM performance in log analysis (the process of reviewing, interpreting, and understanding logs generated by systems, networks, and applications).

Therefore, existing methods suffer from the following limitations:
(1) rule-based methods require manual maintenance and are unable to detect zero-day attacks; (2) anomaly-based methods fail to adapt to evolving system behavior over time, resulting in high false positive rates;
(3) alerts generated by anomaly-based methods lack interpretability (the extent to which a cause and effect can be observed within a system, in order to predict what is going to happen, given a change in input or algorithmic parameters), making it difficult for security analysts to investigate detected anomalies;
(4) in many cases, the evaluation performed used training data that do not reflect real-world scenarios, leading to unrealistic (incorrect) performance results;
(5) existing methods face challenges with scalability and have high computational demands, which limit their practical deployment.
(6) insufficient application of LLMs in APT detection and investigation, particularly with the use of provenance data.

It is therefore an object of the present invention to provide a system and a method for performing effective anomaly detection and investigation of persistent threats in provenance-based systems, along with the interpretation of detected anomalies.

It is another object of the present invention to provide a system and a method for providing effective anomaly detection and investigation of persistent threats, which does not require extensive labeled datasets.

It is a further object of the present invention to provide a system and a method for providing effective anomaly detection and investigation of persistent threats, which is capable of obtaining contextual understanding of potential attacks.

It is still another object of the present invention to provide a system and a method for providing effective anomaly detection and investigation of persistent threats, which improves the accuracy of APT detection.

Other objects and advantages of the invention will become apparent as the description proceeds.

### Summary of the Invention

An LLM-based method for detecting Advanced Persistent Threat (APT) and providing natural language interpretability of the detection findings, according to which unsupervised learning is performed, for statistical anomaly detection in provenance data of provenance-based systems; Large Language Models (LLMs) with implicit knowledge are used to detect unknown attack patterns by performing context-aware graph-based analysis of detected anomalies in the provenance data, for accurate interpretation of the detected anomalies and underlying context of potential attacks; natural language explanations, drawing connections between events, and outputting insights, based on the interpretation are provided.

The unknown attack patterns may comprise novel and zero-day attacks.

The method is also applicable to environments where large amounts of pre-labeled data or balanced datasets are unavailable.

An LLM-based framework for detecting Advanced Persistent Threat (APT) and providing natural language interpretability of the detection findings, comprising:
a) a deviation analyzer module for:
   a.1) identifying deviations from normal system behavior in the log data by employing a LOF model which is trained on normal system activities;
   a.2) flagging logs that demonstrate unusual patterns;
   a.3) detecting event-level anomalies;
   a.4) adding processes and their first-level ancestors and descendants;
   a.5) flagging deviations from normal system behavior by using the LOF model for obtaining a recall value of one, by:
   a.6) considering each log in the provenance data is as a separate data point; training the LOF model to learn a baseline;
   a.7) identifying new data points are as anomalous if the new data points deviate from the baseline; and
b) a graph analyzer module, for examining the relationships between processes and identifying potential points of infection. This module constructs a graph representation of the process interactions, derived from the anomalous data frame.

The deviations may include:
a) the creation of a new process object;
b) new interactions between an existing process and a new object;
c) deviations from the expected event between an existing process and object.

Anomalous data-frame may be created by:
a) upon identifying an anomaly, extracting the process identifier associated with the anomalous log entry, along with its one-hop lineage;
b) for an anomalous process, capturing the one-level ancestor from which it receives the data and the one-level descendant to which it might have forwarded the data to;
c) consolidating the one-level ancestor and the one-level descendant into an anomalous data frame, being represented as a reduced provenance graph.

A reduced graph can be created by:
a) referring to all external sockets as initial infection points;
b) tagging all of the processes that receive the data from initial infection points as suspicious;
c) allowing the tags to propagated along a path to the nodes that receive the data from these suspicious processes and to all the entities that exist in the path, wherein a tag propagation path ends when a socket object is encountered, or when entities other than socket objects do not relay the data they receive.
d) pruning all of the nodes of non-Infected subgraphs that are not part of the attack, where a node is removed from the graph when the node is not tagged as suspicious or when the node does not relay the data it receives;
e) obtaining a reduced graph after pruning at the graph analyzer module's output.

Community detection may be performed by applying the Louvain detection algorithm to the reduced graph from the graph analyzer module, to cluster related nodes into communities.

Breaking down multi-stage attacks into simpler tasks may be performed by:
a) prompting the LLM analyzer module to analyze the logs and events associated with all of the nodes in each community found by the Louvain algorithm; and
b) using Few-shot and chain prompting techniques to generate various prompts for guiding the LLM analyzer module to determine whether a coherent attack was discovered, by utilizing the inherent domain knowledge of the LLM analyzer module.

The method may further comprise the steps of:
a) Whenever the LLM analyzer module detects any suspicious activity within a community, identifying, by the LLM analyzer, the processes involved and calculates an attack confidence score;
b) Whenever the confidence score exceed an attack description threshold, generating, by the LLM analyzer module, a comprehensive attack description, detailing the identified processes, the sequence of actions taken, and the potential stages of the attack;
c) Tagging, by the LLM analyzer module, the relevant process identifiers as suspicious, and the suspicious process identifiers are subsequently marked in the graph;
d) whenever the attack confidence score meets or exceeds the threshold, issuing an alert, accompanied by a detailed explanation of the findings.

The method may also comprise the steps of:
a) initiating a tracing phase to generate a set of tuples <process, event, object, timestamp>, which are added to the primary queue;
b) after each time window is processed, integrating the results into a global attack set of tuples, for maintaining a view of both ongoing and historical attacks;
c) Performing a merge and filter operation on all attack sets;
d) reorganizing the queue and merging and sorting sets, based on correlations by their timestamps;
e) recalculating the confidence of each updated set by requesting the LLM to re-analyze it.

Whenever the attack confidence score meets or exceeds the threshold, an interpretable alert may be generated and sent to the analyst, accompanied by a detailed explanation of the findings.

### Brief Description of the Drawings

The above and other characteristics and advantages of the invention will be better understood through the following illustrative and non-limitative detailed description of preferred embodiments thereof, with reference to the appended drawings, wherein:
- Fig. 1 (prior art) illustrates an example of a provenance graph that generated from the data and depicts the relationships between processes, files and sockets, while illustrating their interactions and data flows;
- Fig. 2 illustrates the pipeline of the proposed framework, showing the interaction between the deviation analyzer, graph analyzer, and the LLM analyzer;
- Figs. 3A-3D illustrates the operation of detecting event-level anomalies by the deviation analyzer, followed by the addition of the processes and their first-level ancestors and descendants for further analysis;
- Figs. 4A-4D illustrates the operation of detecting infection points by the Graph Analyzer, followed by iterative pruning of benign entities from the provenance graph, resulting in a reduced graph structure optimized for further analysis;
- Figs. 5A-5C illustrates the operation of tagging malicious processes, performing backward and forward tracing to analyze suspicious activities, and subsequently adding detected suspicious nodes to the primary queue of attack graphs, performed by the LLM analyzer: and
- Fig. 6 provides a visual representation of the attack graph, showing the ground truth of the attack.

### Detailed Description of the Invention

The present invention proposes a system (framework) and a method for providing effective anomaly detection and investigation of persistent threats, which is capable of obtaining contextual understanding of potential attacks and improving the accuracy of APT detection, without requiring extensive labeled datasets. The system (framework) comprises a computerized device with at least one processor and associated memory that stores dedicated software, which are configured to perform unsupervised learning, for statistical anomaly detection in provenance data of provenance-based systems.

The proposed method and system combine unsupervised learning (algorithms that analyze and group unlabeled data to discover hidden patterns, structures, and relationships without human supervision) for anomaly detection in provenance-based systems with the advanced contextual understanding capabilities of Large Language Models (LLMs), in order to understand attack patterns. The proposed method and system use LLMs' implicit knowledge to uncover unknown attack patterns in the provenance data and is designed to detect and analyze unknown attacks with high accuracy and minimal false alarms, under challenging real-world conditions.

The proposed method and framework require minimal training data, and are able to perform effectively even on skewed datasets (skewed datasets often occur in scenarios like fraud detection, medical diagnosis, or rare event prediction, where one class is significantly underrepresented) with limited attack events, making it highly adaptable to environments where large amounts of pre-labeled data (raw data that has been automatically tagged, annotated, or labeled by a machine learning model or algorithm before being reviewed and refined by humans) or balanced datasets (classification datasets where each target class is represented by an approximately equal number of samples, to ensure that machine learning models do not favor the majority class, thereby improving performance, fairness, and generalization) are unavailable. The proposed method also ensures zero data leakage, where the system strictly avoids using future data during its training or analysis phases, thereby maintaining the integrity of its detection and investigation process. The proposed method uses LLMs to perform context-aware attack analysis (intelligence-driven cybersecurity approach that moves beyond signature-based detection to understand the "meaning" behind events by incorporating environmental, behavioral, and situational data), to provide in-depth investigation capabilities. The proposed method understands the context and patterns associated with complex cyber-attacks, thereby providing detailed and informed analysis of novel and zero-day attacks.

The present invention provides a framework that combines statistical anomaly detection and graph-based analysis with the contextual analysis capabilities of large language models (LLMs), by using the implicit knowledge of LLMs to uncover hidden attack patterns in provenance data, while reducing false positives and providing clear, interpretable attack descriptions. This makes it easier for cybersecurity teams to understand the threat landscape.

The proposed framework employs an unsupervised learning paradigm to detect anomalies, so as to eliminate the need for extensive labeled datasets (data that is annotated with meaningful tags, or labels, that classify the data's elements or outcomes) that are required by supervised methods. Advanced LLMs are integrated to assist in the investigation and interpretation of detected anomalies. The use of Large Language Models (LLMs - an LLM is a model that is trained on immense amounts of data, making it capable of understanding and generating natural language and other types of content to perform a wide range of tasks) enables the proposed framework to performing accurate interpretation of detected anomalies and understand and process the underlying context of a potential attack. This contextual understanding enhances security analysts' ability by providing natural language explanations, drawing connections between different events, and offering insights. By combining statistical anomaly detection with the contextual reasoning (a cognitive or computational process that interprets information based on its specific situation, environment, or surrounding circumstances rather than in isolation) capabilities of LLMs, the framework not only improves the accuracy of APT detection but also streamlines the investigation process. This approach also addresses the problem of high false positive rates and lack of interpretability of existing methods. The proposed framework can adapt to changes in system behavior over time, thereby serving as a more robust and scalable solution for real-world cybersecurity environments.

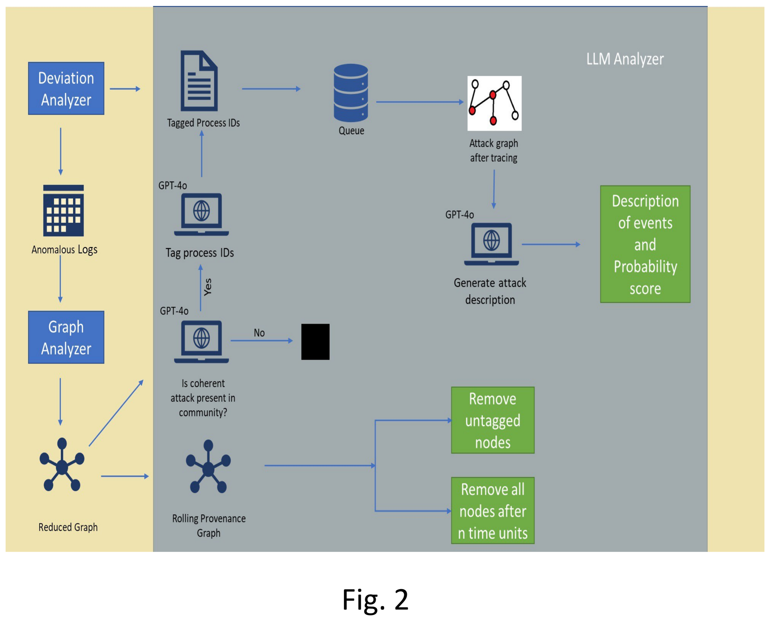

The proposed framework comprises three main modules: a deviation analyzer, a graph analyzer, and an LLM analyzer module, as shown in Fig. 2. Each module is designed to address specific challenges in APT detection, from identifying anomalous behavior to providing a detailed interpretation of potential threats. The architecture of the proposed framework ensures scalability and adaptability, making it highly effective for real-world attack scenarios.

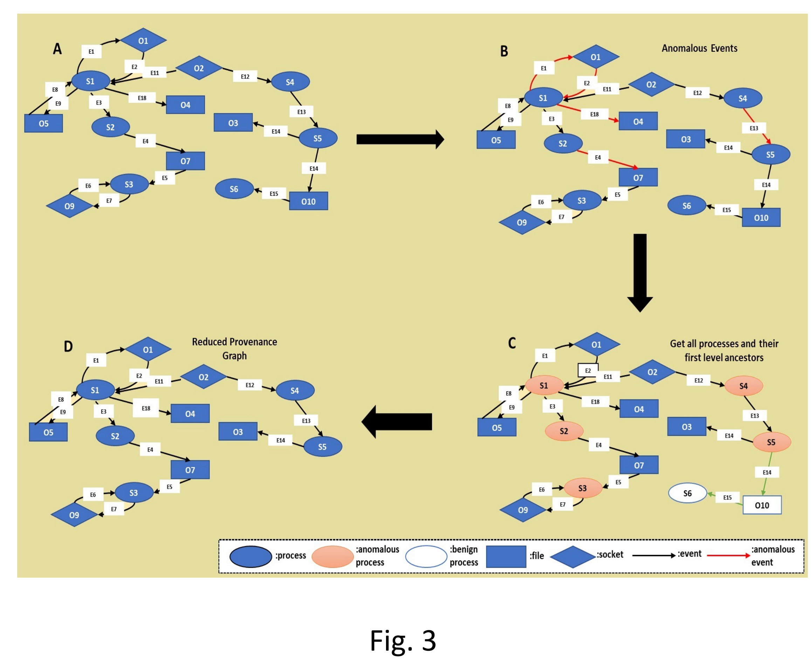

Figs. 3A-3B illustrate the operation of the deviation analyzer module which includes the detection of event-level anomalies, followed by the addition of the processes and their first-level ancestors and descendants for further analysis. In the first stage of the pipeline, the deviation analyzer module is used to identify deviations from normal system behavior in the log data. The deviation analyzer module employs an outlier detection algorithm (such as a LOF model), which is a widely used method for detecting anomalies in complex datasets. The LOF model is trained on normal system activities, enabling it to flag logs that demonstrate unusual patterns.

Anomaly detection is performed by an anomaly detector (which may be a separate module or included in the deviation analyzer), in order to achieve a recall value (the percentage of data samples that a machine learning model correctly identifies as belonging to a class of interest-the "positive class"- out of the total samples for that class) of one. For this purpose, the anomaly detector needs to be able to flag subtle deviations from normal system behavior by using the LOF model, which has the ability achieve a recall value of one, with an acceptable amount of false alarms [19]. Each log in the provenance data is considered as a separate data point and the LOF model is trained to learn the baseline. Any new data points are identified as anomalous if they deviate from the baseline as shown in Fig. 3B. Deviations include the creation of a new process object, a new interaction between an existing process and a new object, and deviations from the expected event between an existing process and object. The LOF model serves as a first-stage data filter, thereby achieving a very high recall, while triggering few false positives. By applying the LOF model, a reduction of approximately 7 to 10 times in the size of the test data is achieved across various datasets. Although the LOF model may initially produce some false positives, they are significantly minimized in the later stages of the pipeline.

### Anomalous Dataframe Creation:

Upon identifying an anomaly, the proposed framework extracts the process identifier associated with the anomalous log entry, along with its one-hop lineage (data lineage tracking that maps the immediate, direct relationships between data assets, covering only one step (or "hop") upstream (source) or downstream (destination) from a specific entity - first-level ancestors and descendants processes) as shown in Fig. 3C. The reason for choosing one-hop lineage (data lineage that shows the immediate, direct upstream (source) or downstream (destination) relationships of a specific data asset) stems from a well-known property of system-level provenance graphs is that a process is responsible for transferring data between two objects. Therefore, for an anomalous process, the one-level ancestor from which it receives the data and the one-level descendant to which it might have forwarded the data to, are captured. These elements are then consolidated into an anomalous data frame which can be represented as a reduced provenance graph, as illustrated in Fig. 3D. This reduced provenance graph, serves as a focused dataset for further analysis.

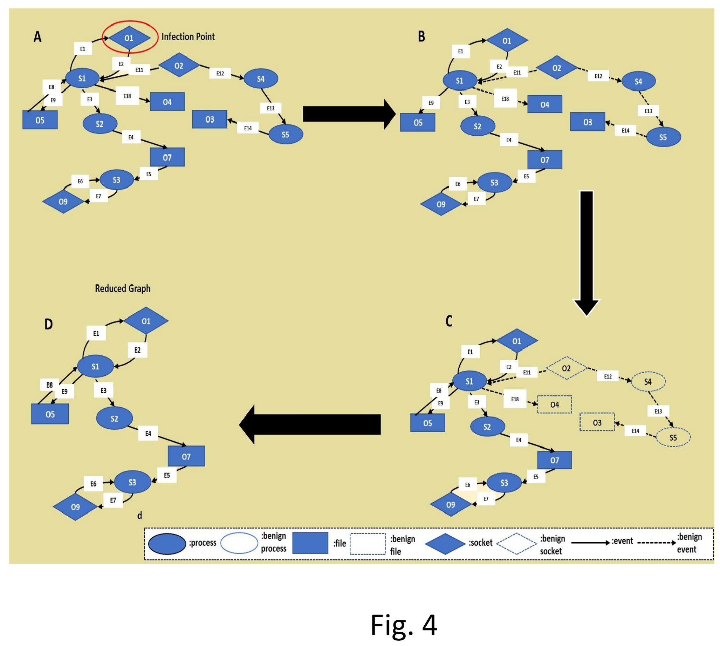

The graph analyzer module, which is illustrated in Fig. 4, is the core analysis component of the pipeline, and is responsible for examining the relationships between processes and identifying potential points of infection. This module constructs a graph representation of the process interactions, derived from the anomalous data frame.

### Detection of Initial Infection Points

Sockets serve as the interface between the system and an external entity. It is assumed that any attack originates from an external socket. For example, a user visiting a malicious website that downloads a payload to the system is represented as a two-way communication between a browser process and an external socket. Similarly, a website receiving an exploit code (software, data, or sequences of commands that take advantage of vulnerabilities in hardware or software to cause unintended behavior, such as gaining unauthorized access, escalating privileges, or launching malware) from an external entity is represented as a one-way communication between an external socket and a web service process. In both cases, sockets are the objects from which the attack was initiated. Therefore, all such external sockets are referred to as initial infection points. In Fig. 4A, socket objects O1, O5, and O9 are initial infection points.

The suspicious tags propagate from the initial infection points to other nodes in the provenance graph. Initially, all of the processes that receive the data from initial infection points are tagged as suspicious. Then, these tags are propagated to the nodes that receive the data from these suspicious processes. Tags are thus propagated to all the entities that exist in the path. A tag propagation path only ends when: (1) a socket object is encountered, or (2) entities other than socket objects do not relay the data they receive. Fig. 4B shows tag propagation paths in the graph.

After the tags have been propagated, all of the nodes (of non-Infected subgraphs) that are not part of the attack (and are therefore unimportant) are pruned. A node is removed from the graph when: (1) the node is not tagged as suspicious (entities O2, S4, S5, O3 in Fig. 3C), or (2) the node does not relay the data it receives (entity O4 in Fig. 4C). The graph analyzer module's output is the reduced graph after pruning has been performed.

Community Detection (a network analysis technique that segments a graph into clusters (communities) of nodes that are more densely connected internally than with the rest of the network) is performed using the Louvain detection algorithm that is applied to the reduced graph from the graph analyzer module, to cluster related nodes into communities. This clustering helps in understanding the broader context of process-object interactions and identifying groups of processes that may be working together to carry out an attack.

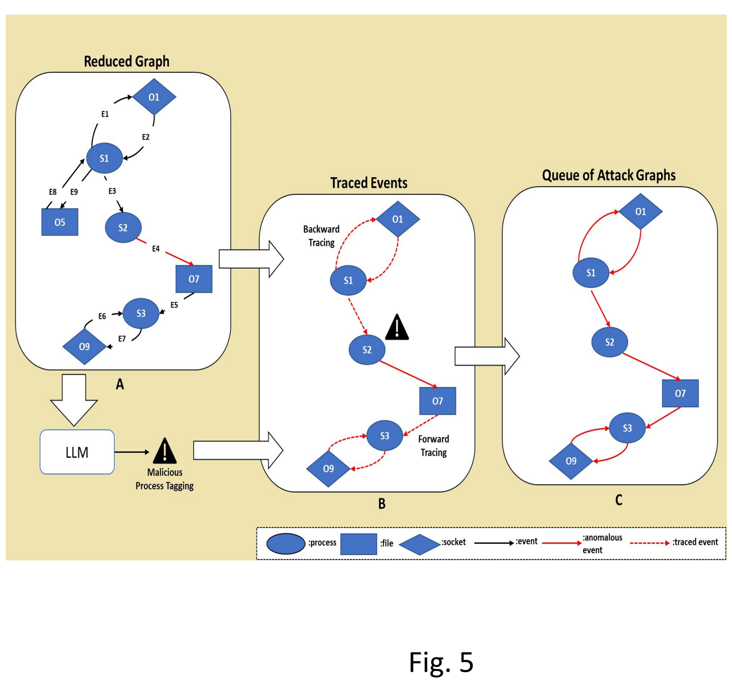

The LLM analyzer module, shown in Fig. 5 in the pipeline, leverages the advanced reasoning capabilities of GPT-4o to identify, tag, and describe complex attack patterns. Using both few-shot (a technique where an Al model is provided with a small number of examples within the prompt to demonstrate the desired task, format, or tone. It enables in-context learning, allowing models to improve performance on complex tasks without retraining or fine-tuning) and chain prompting techniques, the LLM analyzer module is guided through structured steps to break down multi-stage attacks into simpler, manageable tasks.

First, the LLM analyzer module is prompted to analyze the logs and events associated with all of the nodes in each community found by the Louvain algorithm, as depicted in Fig. 5A. Few-shot and chain prompting techniques are used to generate various prompts. These prompts are aimed at guiding the LLM analyzer module to determine whether a coherent attack was discovered, by utilizing its inherent domain knowledge.

If the LLM analyzer module detects any suspicious activity within a community, it identifies the processes involved and calculates an attack confidence score (a metric, typically that measures the probability or likelihood that a security alert, threat indicator (IOC), or machine learning classification is correct and actually malicious). In case the score exceeds the attack description threshold (0.80), the LLM analyzer module generates a comprehensive attack description, detailing the identified processes, the sequence of actions taken, and the potential stages of the attack. The LLM analyzer module tags the relevant process identifiers as suspicious, and these suspicious process identifiers are subsequently marked in the graph. In cases where the attack confidence score meets or exceeds the threshold, an interpretable alert is generated and sent to the analyst, accompanied by a detailed explanation of the findings, including a breakdown of how the attack unfolded and its potential consequences. Even if the score does not meet the attack description threshold, the system still tags suspicious processes and initiates the tracing phase, although no alert is generated. The tracing phase generates a set of tuples <process, event, object, timestamp>, which are added to the primary queue (Fig. 5C). This approach enhances the system's flexibility in real-world environments, where there is a need to adjust the threshold based on the network's criticality and sensitivity.

After each time window is processed, the results are integrated into a global attack set of tuples, maintaining a comprehensive view of both ongoing and historical attacks. A merge and filter operation is then performed on all attack sets, followed by queue reorganization. Sets are merged based on correlations and sorted by their timestamps. The refined sets are subsequently sent to the LLM for re-analysis, which recalculates the confidence of each updated set by requesting the LLM to re-analyze it and generates a new confidence score for each set. For example, in the THEIA dataset (a vision foundation model for robot learning that distills multiple off-the-shelf vision foundation models trained on varied vision tasks), a process called profile performs Command and Control (C2) activity on day one and then goes dormant. On day three, it downloads a malicious payload in /var/log/mail and forks a process called mail which performs further malicious activities. Initially, the profile process is associated with set 0, with a confidence score of 0.95. Later, on day three, new partial attack is detected and assigned to a different set with a confidence score of 0.85. These sets are merged, and the new confidence score is updated to 0.9.

Another unique feature of the proposed framework is the rolling provenance graph, which manages the memory usage while tracking long-term attacks. In this approach, new nodes representing processes and events are continuously added to the provenance graph from the reduced graph generated during the Graph Analyzer phase. These new nodes ensure that when suspicious activities are detected, they are properly integrated into the graph, thereby allowing the system to maintain an up-to-date view of all potential threats. To maintain efficiency over time, nodes are removed from the graph after a predefined time window, r units of time (set to one day in the experiments made). This dynamic pruning helps controlling the graph size, preventing memory exhaustion during prolonged attacks that may span days, weeks, or even months. Despite the removal of older nodes, the queue methodology preserves the integrity of the attack timeline. Suspicious events are continually tracked in the queue, to ensure that partial attacks, even those whose nodes have been removed from the provenance graph, are still accurately mapped into a single, comprehensive attack. As new data is processed, the system efficiently correlates these suspicious events to their corresponding sets, to ensure that the attack structure remains coherent over time. By combining the addition of new nodes with strategic pruning, the rolling provenance graph strikes a balance between memory efficiency and accurate, long-term attack tracking. This feature allows the proposed framework to handle complex, multi-stage APTs over extended periods without being overwhelmed by excessive data.

The proposed framework implements two key mechanisms: decay and reinforcement. A decay mechanism is applied when a tagged set continues to exhibit benign behavior over subsequent analysis windows. Without further suspicious activities supporting the initial classification, the confidence score gradually decreases. Once the confidence score falls below a certain threshold (0.7), the set is removed from active analysis and its nodes become eligible for pruning. (2) Reinforcement, which is activated when a set initially receives a lower confidence score due to early-stage attack indicators. As additional stages of the attack manifest in subsequent windows, the confidence score increases proportionally, reflecting mounting evidence of malicious intent. This approach effectively identifies APTs that evolve slowly over time. If the confidence score of an attack falls below a certain threshold (0.8), the event is moved to a secondary queue for further analysis. This process prioritizes high-confidence threats while ensuring that potential early-stage threats remain under consideration. The use of the two mechanisms allows the proposed framework to perform automatic adaptive risk assessment, where the system continuously updates its risk assessment based on new data, while dynamically adjusting the likelihood of threats as more evidence is gathered.

The proposed framework has been implemented in Python 3.11, employing custom parsers 8 to extract data from different log sources. Incomplete records were filtered out to ensure data integrity. The LOF model in the deviation analyzer module was built using the scikit-learn library [27], while graph processing throughout the pipeline was managed using the NetworkX module [9]. OpenAl's API has been used to query the GPT-4o model (that accepts as input any combination of text, audio, image, and video and generates any combination of text, audio, and image outputs. GPT-4o is especially better at vision and audio understanding compared to existing models) for log analysis, malicious process tagging, and generating attack descriptions.

Three datasets were used to assess the proposed framework's performance in detecting and investigating APTs. The datasets cover various system environments, to ensure a comprehensive evaluation of the proposed approach.

The THEIA dataset [3] consists of over 106 million system audit logs collected over a 12-day period in an Ubuntu Linux environment. It is around 40GB in size and includes two instances of an APT attack and one unsuccessful attack attempt. One attack instance in the dataset spans over a period of three days, making it viable for the evaluation of long-duration multi-stage APT attack detection that spans over a long period.

Like the THEIA dataset, the CADETS dataset [3] is a part of the DARPA Engagement 3 program. It consists of 42 million audit logs collected over a 12-day period in a FreeBSD environment, and it is around 25GB in size. It includes four instances of an APT attack, of which three were successfully performed while the fourth was a failed attempt.

The Public Arena dataset [30] was collected over a period of six days from two Windows hosts in a simulated public cloud environment collected. It comprises 16 million audit records and it is around 7GB in size, thereby enabling to effectively evaluate the proposed method across a range of platforms. For each dataset, the focus is on extracting key data transfer events, enabling the reconstruction of provenance information crucial for APT detection [39, 40].

To ensure that the evaluation reflects real-world scenarios, training and test set creation stages were performed such that each dataset has been split into training and testing windows. For the training, data from earlier logs has been used, prior to the occurrence of the first attack event, minimizing data leakage and simulating challenges of deploying the proposed framework in a real-time environment (see Table 1 for the time windows); specifically, for training, 28% of the CADETS logs were used, 35% of the THEIA logs, and 29% of the Public Arena logs. This split between training and testing data maintains consistency across datasets and ensures sufficient historical context for extended inference periods during testing.

DARPA released their ground truths with details about the attack events (IPs, events, files, etc.), and similarly, the Public Arena dataset provides ground truth information (real word data used to train and test Al model outputs). However the exact logs which are part of the attack events were not denoted and required manual tagging. To map the key Indicators of Compromise, e.g., files, IPs, the provenance graph's inherent property that there must be at least one subject that facilitates data transfer among various objects, was used. Then, the processes associated with these objects and the processes interacting with these tagged processes were tagged as part of the attack. These tagged processes and their activities were used to reconstruct the attack sequences. Finally, each attack's attributes were aligned with corresponding events in the logs.

Table 1 summarizes the characteristics of each dataset, including key provenance statistics such as the number of edges, nodes, malicious entities, and overall dataset size.

**Table 1 - Train and test windows with detailed provenance statistics**

| **Dataset** | **Split Time** | **Train** | | **Test** | | | | |
|---|---|---|---|---|---|---|---|---|
| | | **Duration** | **# Logs** | **Duration** | **# Logs** | **# Attacks** | **Provenance Statistics** | |
| | | | | | | | **Benign (N, E, KE)** | **Malicious (N, E, KE)** |
| CADETS | 2018-04-06 11:00:00 | 6D8H | 4,239,474 | 3D4H | 10,949,668 | 3 | 263,775, 10,947,794, 1,293,534 | 33, 2,037, 54 |
| THEIA | 2018-04-09 22:15:12 | 3D13H | 9,654,772 | 7D11H | 17,827,942 | 1 | 492,556, 17,827,833, 1,823,963 | 16,170, 32 |
| Public arena | 2022-05-13 00:00:00 | 3D9H | 2,593,769 | 7D9H | 6,468,573 | 1 | 25,527, 6,093,093, 106,285 | 6, 375,480, 23 |

| | | | | | | | | |
|---|---|---|---|---|---|---|---|---|
| N - nodes, E - edges, KE - key edges; | | | | | | | | |

To evaluate the proposed framework's performance, a multi-layered approach that operates at two distinct levels has been employed - the graph level for attack-level detection, and the edge level for event-level detection. This framework allows focusing on various aspects of the system's ability to detect and trace malicious activities, providing both high-level (attack) insights and more granular (event) details from system level events. Key metrics such as precision, recall, and the F1 score have been employed to measure the models' detection capabilities. The False Positive Rate (FPR) at event level has been calculated to assess the relevance of the alerts generated and evaluate the proposed framework's ability to minimize false positives and reduce alert fatigue. The FPR at the graph level due to variations in graph partitioning techniques was not calculated. Instead, methods were distinguished by their use of static or Dynamic Graph Construction (DGC), as dynamic graphs better capture the long-duration attack patterns seen in APTs.

Table 2 below shows a graph-level evaluation: precision, recall, and F1 score (F1 score is a machine learning evaluation metric that combines precision and recall scores) for CADETS, THEIA, and Public Arena datasets. The table showcases the proposed framework's performance at the graph level, where it achieved perfect precision and recall, outperforming DISTDET (a distributed detection system that detects APT attacks by performing light weight detection based on the host model built in the client side, filtering false alarms based on the semantics of the alarm proprieties, and deriving global models to complement the local bias of the host models) [6] and matching the high performance of UNICORN (an anomaly-based APT detector that effectively leverages data provenance analysis) [10].

**Table 2**

| **Dataset** | **Method** | **Precision** | **Recall** | **F1 score** | **DGC** |
|---|---|---|---|---|---|
| CADETS | SHIELD | 1.00 | 1.00 | 1.00 | Yes |
| | UNICORN | 1.00 | 0.98 | 0.98 | No |
| | DISTDET | 1.00 | 0.98 | 0.98 | Yes |
| THEIA | SHIELD | 1.00 | 1.00 | 1.00 | Yes |
| | UNICORN | 1.00 | 1.00 | 1.00 | No |
| | DISTDET | 1.00 | 0.98 | 0.98 | Yes |
| Public Arena | SHIELD | 1.00 | 1.00 | 1.00 | Yes |
| | DISTDET | 0.9 | 0.88 | 0.89 | Yes |

Unlike the proposed framework, which employs dynamic graph construction (DGC), UNICORN generates static graphs containing over 100,000 nodes, creating significant overhead for security analysts who must manually identify malicious activities within the graph. In contrast, the proposed framework's approach produces alerts based on more focused, dynamic graph updates, allowing for fine-grained detection and reducing the burden on analysts while effectively capturing long-term attack patterns.

Table 3 presents the edge (Event)-level detection results, where the proposed framework consistently surpasses DeepLog (a deep neural network model utilizing Long Short-Term Memory LSTM, to model a system log as a natural language sequence) in recall, precision, and the F1 score while maintaining a significantly lower FPR across all datasets. This demonstrates the proposed framework's ability to accurately identify malicious events and trace attack paths in the system's provenance data. Methods such as UNICORN and DISTDET are less effective at the edge level, limiting their ability to capture detailed attack narratives.

Table 3 presents Edge-level evaluation: precision, recall, F1 score, and FPR for CADETS, THEIA, and Public Arena datasets.

**Table 3**

| **Dataset** | **Method** | **Precision** | **Recall** | **F1-score** | **FPR** |
|---|---|---|---|---|---|
| CADETS | SHIELD | 1.00 | 0.90 | 0.95 | 0.0 |
| | DeepLog | 0.00 | 0.89 | 0.00 | 0.04 |
| THEIA | SHIELD | 0.40 | 1.00 | 0.57 | 0.0 |
| | DeepLog | 0.00 | 0.86 | 0.00 | 0.04 |
| Public Arena | SHIELD | 0.08 | 1.00 | 0.15 | 0.0 |
| | DeepLog | 0.00 | 1.00 | 0.01 | 0.01 |

Table 4 presents the edge-level performance metrics for the proposed framework across different attacks. The table highlights the number of key (True Positive - TP) and benign (False Positive - FP) events, along with False Negatives (FN), in the attack graphs, providing a clearer understanding of the graph size and detection quality.

Table 4 presents a Reduced Graph Metrics of the proposed framework: precision, recall, TP, FP, and FN across CADETS, THEIA, and Public Arena datasets.

**Table 4**

| **Dataset** | **Attack** | **TP** | **FP** | **FN** | **Precision** | **Recall** |
|---|---|---|---|---|---|---|
| CADETS | Attack 1 | 13 | 0 | 1 | 1.00 | 0.928 |
| | Attack 2 | 22 | 0 | 2 | 1.00 | 0.880 |
| | Attack 3 | 18 | 0 | 2 | 1.00 | 0.900 |
| THEIA | Attack 1 | 32 | 47 | 0 | 0.40 | 1.000 |
| Public Arena | Attack 1 | 23 | 251 | 0 | 0.08 | 1.000 |

As can be seen, the proposed framework consistently demonstrates its robustness and utility across diverse datasets, as evidenced by its high recall values, which confirm its ability to accurately identify key attack events, and its high precision in filtering out benign activities. The system's adaptability to various log sources, including both static and dynamic data, makes it highly versatile for deployment in a wide range of operational environments, from small-scale enterprises to large, complex infrastructures. In environments such as Security Operations Centers (SOCs), where time is critical, the detailed, context-rich attack narratives generated by the proposed framework will significantly enhance incident response time, further emphasizing its effectiveness in real-world applications.

System provenance data captures key interactions between entities in a system, thereby providing insights into the underlying processes and behaviors. The proposed framework utilizes this data to generate comprehensive alert descriptions, mapping anomalous activities with various phases of the cyber kill chain (framework that breaks down a cyberattack into seven sequential stages to help organizations identify, understand, and prevent intrusions, especially APTs). These descriptions enable security analysts to quickly assess and respond to potential threats. The effectiveness of the alert descriptions produced by the proposed framework is evaluated, using case studies from the CADETS dataset.

The logs indicate a coordinated attack involving the nginx process and a suspicious executable (pEja72mA). The attack starts with nginx receiving and sending data from various external IPs (25.159.96.207, 76.56.184.25, 155.162.39.48), possibly in preparation for exploitation. nginx then writes and modifies temporary files (/tmp/pEja72mA and /tmp/eWq10bVcx), which suggests that it is creating and preparing malicious executables. The pEja72mA process is then executed and communicates with an external IP (53.158.101.118:80), further indicating a potential command-and-control channel. After execution, pEja72mA reads and writes to different files (memhelp.so and eraseme), which may represent malicious payloads or persistence mechanisms. The sequence of events demonstrates exploitation and command-and-control activities, followed by potential post exploitation actions.

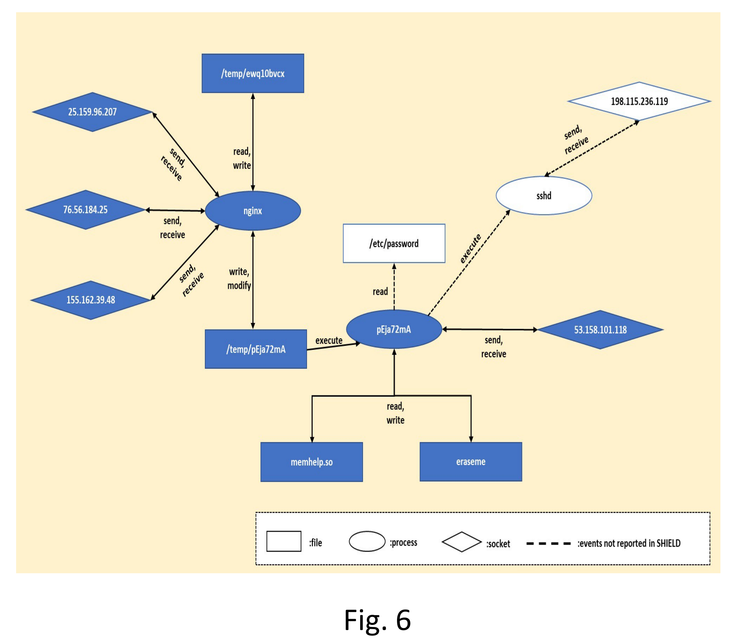

Fig. 6 provides a visual representation of the attack graph, showing the ground truth (verified, accurate, and labeled information used to train, test, and validate machine learning models) of the attack. Using the proposed framework, it is possible to generate this attack description with high accuracy, highlighting critical stages of the kill chain and identifying key indicators of compromise. By providing clear, actionable insights and visualizing complex attack patterns, the proposed framework significantly reduces the time and effort required for analysts to assess and mitigate potential threats, improving both the speed and accuracy of incident response.

The proposed framework introduces a multi-layered approach for detecting and investigating Advanced Persistent Threats (APTs) using system logs. By combining statistical anomaly detection, performing context-aware graph-based analysis of detected anomalies in the provenance data, and the interpretive capabilities of Large Language Models (LLMs), the proposed framework addresses critical challenges in modern cybersecurity. The proposed framework is designed to detect both known and unknown threats, providing a comprehensive solution for complex attack scenarios. LLMs were effectively used to detect and investigate sophisticated APT behaviors that often evade traditional detection methods. The LLM not only flags suspicious activities but also generates detailed, interpretable attack descriptions, significantly enhancing both precision and interpretability. These LLM-driven insights streamline the investigation process, thereby allowing analysts to make informed decisions faster. This suggests that LLMs, when applied in this manner, hold significant potential for a wide range of detection scenarios. The proposed framework introduces several novel techniques, such as queue management via decay and reinforcement, and rolling provenance graph updates. These mechanisms enable the detection of long-term, multi-stage APTs that may span extended periods, while balancing alert fatigue by prioritizing critical events. This adaptive approach ensures that security analysts can focus on pressing threats without being overwhelmed by false positives or lower-priority events. Additionally, the integration of the Louvain algorithm (a hierarchical clustering method for detecting community structures within networks) for community detection, combined with probabilistic attack detection and adaptive graph pruning, optimizes both performance and resource usage. By clustering related processes and refining the graph over time, the proposed framework maintains high detection accuracy for long-duration, multi-stage attacks while minimizing computational overhead. The evaluation results further highlight the proposed framework's effectiveness across both edge-level and graph-level detection. At the graph level, the proposed framework achieved perfect precision and recall, outperforming comparable methods like DISTDET and on par with UNICORN. At the edge level, it consistently outperformed methods such as DeepLog, demonstrating superior accuracy in identifying malicious events while maintaining a lower false positive rate. These results emphasize the proposed framework's ability to detect intricate attack paths and long term behaviors, making it highly suitable for deployment in real world environments. The illustrative example from the CADETS dataset underscores the proposed framework's ability to generate actionable insights by tracing multi-stage attacks in detail, providing cybersecurity teams with context-rich narratives that guide rapid response.

Chain prompting is used to perform the complex task of identifying intricate attack patterns by breaking it down into smaller, more manageable subtasks, i.e., identifying anomalous activities, correlating these activities across multiple processes, and detecting coherence in the identified attack. This allows the model to capture the entire attack chain. By combining chain prompting with the few-shot prompting technique, prompts that enable the language model to effectively identify complex attack patterns within specific time windows, were generated.

Few-shot prompting [2] involves providing the LLM with a small number of examples to guide it in performing specific tasks. Few-shot prompting has been utilize to instruct GPT-4o on the tasks it must execute, i.e., how to identify suspicious processes, validate whether it has correctly identified them, and generate attack descriptions that are mapped to the cyber kill chain. This technique promotes in-context learning, thereby allowing the model to adapt quickly and perform tasks with high accuracy using a minimal number of examples. The provide prompts are intentionally generic, to avoid rule-based instructions to ensure that the model can detect more complex, unseen events, with the aim of producing a model that is capable of identifying zero-day attacks in the future, due to its inherent domain knowledge.

The CADETS, THEIA datasets and the Public Arena were used in the evaluation, which consist of provenance logs from various operating systems. Each log in provenance data is depicted using a tuple of three elements: <subject, event, object>. Subjects are the active elements in the event that they are responsible for transferring data between two objects. Objects in provenance logs are system level entities such as files, sockets, pipes or child processes. Events are the interactions between subjects and objects.

As various embodiments and examples have been described and illustrated, it should be understood that variations will be apparent to one skilled in the art without departing from the principles herein. Accordingly, the invention is not to be limited to the specific embodiments described and illustrated in the drawings.

### REFERENCES

[1] Abdulellah Alsaheel, Yuhong Nan, Shiqing Ma, Le Yu, GregoryWalkup, Z Berkay Celik, Xiangyu Zhang, and Dongyan Xu. 2021. {ATLAS}: A sequence-based learning approach for attack investigation. In 30th USENIX security symposium (USENIX security 21). 3005-3022.
[2] Tom B. Brown, Benjamin Mann, Nick Ryder, Melanie Subbiah, Jared Kaplan, Prafulla Dhariwal, Arvind Neelakantan, Pranav Shyam, Girish Sastry, Amanda Askell, Sandhini Agarwal, Ariel Herbert-Voss, Gretchen Krueger, Tom Henighan, Rewon Child, Aditya Ramesh, Daniel M. Ziegler, Jeffrey Wu, Clemens Winter, Christopher Hesse, Mark Chen, Eric Sigler, Mateusz Litwin, Scott Gray, Benjamin Chess, Jack Clark, Christopher Berner, Sam McCandlish, Alec Radford, Ilya Sutskever, and Dario Amodei. 2020. Language Models are Few-Shot Learners. arXiv:2005.14165 [cs.CL] https://arxiv.org/abs/2005.14165
[3] DARPA TC [n. d.]. DARPA Transparent Computing (TC) program. https://github.com/darpa-i2o/Transparent-Computing Accessed: 2024-04-04.
[4] Jacob Devlin, Ming-Wei Chang, Kenton Lee, and Kristina Toutanova. 2018. Bert: Pre-training of deep bidirectional transformers for language understanding. arXiv preprint arXiv:1810.04805 (2018).
[5] Feng Dong, Shaofei Li, Peng Jiang, Ding Li, Haoyu Wang, Liangyi Huang, Xusheng Xiao, Jiedong Chen, Xiapu Luo, Yao Guo, et al. 2023. Are we there yet? an industrial viewpoint on provenance-based endpoint detection and response tools. In Proceedings of the 2023 ACM SIGSAC Conference on Computer and Communications Security. 2396-2410.
[6] Feng Dong, Liu Wang, Xu Nie, Fei Shao, Haoyu Wang, Ding Li, Xiapu Luo, and Xusheng Xiao. 2023. {DISTDET}: A {Cost-Effective} Distributed Cyber Threat Detection System. In 32nd USENIX Security Symposium (USENIX Security 23) 6575-6592.
[7] Min Du, Feifei Li, Guineng Zheng, and Vivek Srikumar. 2017. Deeplog: Anomaly detection and diagnosis from system logs through deep learning. In Proceedings of the 2017 ACM SIGSAC conference on computer and communications security, 1285-1298.
[8] Haixuan Guo, Shuhan Yuan, and Xintao Wu. 2021. Logbert: Log anomaly detection via bert. In 2021 international joint conference on neural networks (IJCNN).IEEE, 1-8.
[9] Aric Hagberg, Pieter Swart, and Daniel S Chult. 2008. Exploring network structure, dynamics, and function using NetworkX. Technical Report. Los Alamos National Lab.(LANL), Los Alamos, NM (United States).
[10] Xueyuan Han, Thomas Pasquier, Adam Bates, James Mickens, and Margo Seltzer 2020. Unicorn: Runtime provenance-based detector for advanced persistent threats. arXiv preprint arXiv:2001.01525 (2020).
[11] Xiao Han, Shuhan Yuan, and Mohamed Trabelsi. 2023. LogGPT: Log Anomaly Detection via GPT. arXiv:2309.14482 [cs.LG] https://arxiv.org/abs/2309.14482 [12] Wajih UI Hassan, Adam Bates, and Daniel Marino 2020. Tactical provenance analysis for endpoint detection and response systems. In 2020 IEEE Symposium on Security and Privacy (SP). IEEE, 1172-1189.
[13] Wajih UI Hassan, Shengjian Guo, Ding Li, Zhengzhang Chen, Kangkook Jee, Zhichun Li, and Adam Bates. 2019. Nodoze: Combatting threat alert fatigue with automated provenance triage. In network and distributed systems security symposium.
[14] Md Nahid Hossain, Sadegh M Milajerdi, Junao Wang, Birhanu Eshete, Rigel Gjomemo, R Sekar, Scott Stoller, and VN Venkatakrishnan. 2017. {SLEUTH}: Real-time attack scenario reconstruction from {COTS} audit data. In 26th USENIX Security Symposium (USENIX Security 17). 487-504.
[15] Md Nahid Hossain, Sanaz Sheikhi, and R Sekar. 2020. Combating dependence explosion in forensic analysis using alternative tag propagation semantics. In 2020 IEEE Symposium on Security and Privacy (SP). IEEE, 1139-1155.
[16] Muhammad Adil Inam, Yinfang Chen, Akul Goyal, Jason Liu, Jaron Mink, Noor Michael, Sneha Gaur, Adam Bates, and Wajih UI Hassan. 2023. Sok: History is a vast early warning system: Auditing the provenance of system intrusions. In 2023 IEEE Symposium on Security and Privacy (SP). IEEE, 2620-2638.
[17] Zian Jia, Yun Xiong, Yuhong Nan, Yao Zhang, Jinjing Zhao, and Mi Wen. 2023 MAGIC: Detecting Advanced Persistent Threats via Masked Graph Representation Learning. arXiv preprint arXiv:2310.09831 (2023).
[18] Kabul Kurniawan, Andreas Ekelhart, Elmar Kiesling, Gerald Quirchmayr, and A Min Tjoa. 2022. KRYSTAL: Knowledge graph-based framework for tactical attack discovery in audit data. Computers & Security 121 (2022), 102828.
[19] Aleksandar Lazarevic, Levent Ertöz, Vipin Kumar, Aysel Ozgur, and Jaideep Srivastava. 2003. A Comparative Study of Anomaly Detection Schemes in Network Intrusion Detection. In SDM. https://api.semanticscholar.org/CorpuslD:2470919.
[20] Lavi Lazarovitz. 2021. Deconstructing the solarwinds breach. Computer Fraud & Security 2021, 6 (2021), 17-19.
[21] Yukyung Lee, Jina Kim, and Pilsung Kang. 2021. LAnoBERT : System Log Anomaly Detection based on BERT Masked Language Model. CoRR abs/2111.09564 (2021). arXiv:2111.09564 https://arxiv.org/abs/2111.09564
[22] Shaofei Li, Feng Dong, Xusheng Xiao, Haoyu Wang, Fei Shao, Jiedong Chen, Yao Guo, Xiangqun Chen, and Ding Li. 2024. NODLINK: An Online System for Fine-Grained APT Attack Detection and Investigation. In Proceedings 2024 Network and Distributed System Security Symposium (NDSS 2024). Internet Society.
[23] Fucheng Liu, Yu Wen, Dongxue Zhang, Xihe Jiang, Xinyu Xing, and Dan Meng 2019. Log2vec: A heterogeneous graph embedding based approach for detecting cyber threats within enterprise. In Proceedings of the 2019 ACM SIGSAC conference on computer and communications security. 1777-1794.
[24] Yilun Liu, Shimin Tao, Weibin Meng, Jingyu Wang, Wenbing Ma, Yanqing Zhao, Yuhang Chen, Hao Yang, Yanfei Jiang, and Xun Chen. 2024. Interpretable Online Log Analysis Using Large Language Models with Prompt Strategies. arXiv:2308.07610 [cs.SE] https://arxiv.org/abs/2308.07610
[25] Sadegh M. Milajerdi, Birhanu Eshete, Rigel Gjomemo, and V.N. Venkatakrishnan. 2019. POIROT: Aligning Attack Behavior with Kernel Audit Records for Cyber Threat Hunting. In Proceedings of the 2019 ACM SIGSAC Conference on Computer and Communications Security (CCS '19). ACM. https://doi.org/10.1145/3319535,3363217
[26] Sadegh M Milajerdi, Rigel Gjomemo, Birhanu Eshete, Ramachandran Sekar, and VN Venkatakrishnan. 2019. Holmes: real-time apt detection through correlation of suspicious information flows. In 2019 IEEE Symposium on Security and Privacy( SP). IEEE, 1137-1152.
[27] F. Pedregosa, G. Varoquaux, A. Gramfort, V. Michel, B. Thirion, O. Grisel, M. Blondel, P. Prettenhofer, R. Weiss, V. Dubourg, J. Vanderplas, A. Passos, D. Cournapeau,M. Brucher, M. Perrot, and E. Duchesnay. 2011. Scikit-learn: Machine Learning in Python. Journal of Machine Learning Research 12 (2011), 2825-2830.
[28] Alexis M Pitney, Spencer Penrod, Molly Foraker, and Suman Bhunia. 2022: A systematic review of 2021 microsoft exchange data breach exploiting multiple vulnerabilities. In 2022 7th international conference on smart and sustainable technologies (SpliTech). IEEE, 1-6.
[29] Devin J. Pohly, Stephen McLaughlin, Patrick McDaniel, and Kevin Butler. 2012, Hi-Fi: collecting high-fidelity whole-system provenance. In Proceedings of the 28th Annual Computer Security Applications Conference (Orlando, Florida, USA), (ACSAC '12). Association for Computing Machinery, New York, NY, USA, 259-268, https://doi.org/10.1145/2420950.2420989
[30] PublicArena [n. d.]. PublicArena. https://github.com/security0528/PublicArena. Accessed: 2024-04-04.
[31] UNICORN [n. d.]. Open Source UNICORN implementation: https://github.com/crimson-unicorn. Accessed: 2024-04-04.
[32] Erik van der Kouwe, Gernot Heiser, Dennis Andriesse, Herbert Bos, and Cristiano Giuffrida. 2019. SoK: Benchmarking flaws in systems security. In 2019 IEEE European Symposium on Security and Privacy (EuroS&P). IEEE, 310-325.
[33] Thijs Van Ede, Hojjat Aghakhani, Noah Spahn, Riccardo Bortolameotti, MarcoCova, Andrea Continella, Maarten van Steen, Andreas Peter, Christopher Kruegel, and Giovanni Vigna. 2022. Deepcase: Semi-supervised contextual analysis of security events. In 2022 IEEE Symposium on Security and Privacy (SP). IEEE, 522-539.
[34] Qi Wang, Wajih UI Hassan, Ding Li, Kangkook Jee, Xiao Yu, Kexuan Zou, Junghwan Rhee, Zhengzhang Chen, Wei Cheng, Carl A Gunter, et al. 2020. You Are What You Do: Hunting Stealthy Malware via Data Provenance Analysis. In NDSS.
[35] Su Wang, Zhiliang Wang, Tao Zhou, Hongbin Sun, Xia Yin, Dongqi Han, Han Zhang, Xingang Shi, and Jiahai Yang. 2022. Threatrace: Detecting and tracing host-based threats in node level through provenance graph learning. IEEE Transactions on Information Forensics and Security 17 (2022), 3972-3987.
[36] Jason Wei, Xuezhi Wang, Dale Schuurmans, Maarten Bosma, Brian Ichter, Fei Xia, Ed Chi, Quoc Le, and Denny Zhou. 2023. Chain-of-Thought Prompting Elicits Reasoning in Large Language Models. arXiv:2201.11903 [cs.CL] https: //arxiv.org/abs/2201.11903
[37] Fan Yang, Jiacen Xu, Chunlin Xiong, Zhou Li, and Kehuan Zhang. 2023, {PROGRAPHER}: An Anomaly Detection System based on Provenance Graph Embedding. In 32nd USENIX Security Symposium (USENIX Security 23), 4355-4372.
[38] Han Yu, Aiping Li, and Rong Jiang. 2019. Needle in a haystack: attack detection from large-scale system audit. In 2019 IEEE 19th International Conference on Communication Technology (ICCT). IEEE, 1418-1426.
[39] Jun Zeng, Zheng Leong Chua, Yinfang Chen, Kaihang Ji, Zhenkai Liang, and Jian Mao. 2021. WATSON: Abstracting Behaviors from Audit Logs via Aggregation of Contextual Semantics. NDSS 2021 (2021).
[40] Jun Zengy, Xiang Wang, Jiahao Liu, Yinfang Chen, Zhenkai Liang, Tat-Seng Chua, and Zheng Leong Chua. 2022. Shadewatcher: Recommendation-guided cyber threat analysis using system audit records. In 2022 IEEE Symposium on Security and Privacy (SP). IEEE, 489-506.
[41] Xu Zhang, Yong Xu, Qingwei Lin, Bo Qiao, Hongyu Zhang, Yingnong Dang, Chunyu Xie, Xinsheng Yang, Qian Cheng, Ze Li, et al. 2019. Robust log-based anomaly detection on unstable log data. In Proceedings of the 2019 27th ACM, Joint Meeting on European Software Engineering Conference and Symposium on the Foundations of Software Engineering. 807-817.
[42] Michael Zipperle, Florian Gottwalt, Elizabeth Chang, and Tharam Dillon. 2022, Provenance-based intrusion detection systems: A survey. Comput. Surveys 55, 7 (2022), 1-36.

## Claims

1. An LLM-based method for detecting Advanced Persistent Threat (APT) and providing natural language interpretability of the detection findings, comprising:
a) performing, by a computerized device having at least one processor and associated memory, unsupervised learning, for statistical anomaly detection in provenance data of provenance-based systems;
b) said computerized device is configured to:
use Large Language Models (LLMs) with implicit knowledge, to detect unknown attack patterns by performing context-aware graph-based analysis of detected anomalies in said provenance data, for accurate interpretation of said detected anomalies and underlying context of potential attacks; and
c) provide natural language explanations, drawing connections between events, and outputting insights, based on said interpretation.

2. A method according to claim 1, wherein the unknown attack patterns comprises novel and zero-day attacks.

3. A method according to claim 1, being adaptable to environments where large amounts of pre-labeled data or balanced datasets are unavailable.

4. A method according to claim 1, wherein the deviations include:
a) the creation of a new process object;
b) new interactions between an existing process and a new object; and
c) deviations from the expected event between an existing process and object.

5. A method according to claim 1, further comprising creating anomalous data frame by:
a) upon identifying an anomaly, extracting the process identifier associated with the anomalous log entry, along with its one-hop lineage;
b) for an anomalous process, capturing the one-level ancestor from which it receives the data and the one-level descendant to which it might have forwarded the data to; and
c) consolidating said one-level ancestor and said one-level descendant into an anomalous data frame, being represented as a reduced provenance graph.

6. A method according to claim 1, further comprising creating a reduced graph by:
a) referring to all external sockets as initial infection points;
b) tagging all of the processes that receive the data from initial infection points as suspicious;
c) allowing said tags to propagate along a path to the nodes that receive the data from suspicious processes and to all the entities that exist in said path, wherein a tag propagation path ends when a socket object is encountered, or when entities other than socket objects do not relay the data they receive.
d) pruning all of the nodes of non-Infected subgraphs that are not part of the attack, where a node is removed from the graph when the node is not tagged as suspicious or when the node does not relay the data it receives; and
e) obtaining a reduced graph after pruning, at the graph analyzer module's output.

7. A method according to claim 6, further comprising performing community detection by applying the Louvain detection algorithm to the reduced graph from the graph analyzer module, to cluster related nodes into communities.

8. A method according to claim 6, further comprising breaking down multi-stage attacks into simpler tasks by:
a) prompting the LLM analyzer module to analyze the logs and events associated with all of the nodes in each community found by the Louvain algorithm; and
b) using Few-shot and chain prompting techniques to generate various prompts for guiding the LLM analyzer module to determine whether a coherent attack was discovered, by utilizing the inherent domain knowledge of said LLM analyzer module.

9. A method according to claim 6, further comprising the following steps:
a) whenever the LLM analyzer module detects any suspicious activity within a community, identifying, by said LLM analyzer, the processes involved and calculates an attack confidence score;
b) whenever said confidence score exceed an attack description threshold, generating, by said LLM analyzer module, a comprehensive attack description, detailing the identified processes, the sequence of actions taken, and the potential stages of the attack;
c) tagging, by said LLM analyzer module, the relevant process identifiers (IDs) as suspicious, and the suspicious process identifiers are subsequently marked in the graph; and
d) whenever the attack confidence score meets or exceeds said threshold, generating and sending an interpretable alert, accompanied by a detailed explanation of the findings.

10. A method according to claim 6, further comprising:
a) initiating a tracing phase to generate a set of tuples <process, event, object, timestamp>, which are added to the primary queue;
b) after each time window is processed, integrating the results into a global attack set of tuples, for maintaining a view of both ongoing and historical attacks;
c) performing a merge and filter operation on all attack sets;
d) reorganizing the queue and merging and sorting sets, based on correlations by their timestamps;
e) recalculating the confidence of each updated set by requesting the LLM to re-analyze it.

11. A method according to claim 9, wherein whenever the attack confidence score meets or exceeds the threshold, an interpretable alert is generated and sent to the analyst, accompanied by a detailed explanation of the findings.

12. An LLM-based framework for detecting Advanced Persistent Threat (APT) and providing natural language interpretability of the detection findings, comprising:
a) a computerized device having at least one processor and associated memory, configured to activate and run the following modules:
b) a deviation analyzer module for:
b.1) identifying deviations from normal system behavior in the log data by employing an outlier detection algorithm model which is trained on normal system activities;
b.2) flagging logs that demonstrate unusual patterns;
b.3) detecting event-level anomalies;
b.4) adding processes and their first-level ancestors and descendants;
b.5) flagging deviations from normal system behavior by using the LOF model for obtaining a recall value of one, by:
b.6) considering each log in the provenance data is as a separate data point; training the LOF model to learn a baseline;
b.7) identifying new data points are as anomalous if said new data points deviate from said baseline; and
c) a graph analyzer module for examining the relationships between processes and identifying potential points of infection. This module constructs a graph representation of the process interactions, derived from the anomalous data frame.
